Europäisches Patentamt

European Patent Office

Office européen des brevets

(19)

(11) Veröffentlichungsnummer: **0 273 214 B1**

(12) # EUROPÄISCHE PATENTSCHRIFT

(45) Veröffentlichungstag der Patentschrift: **18.09.91**

(51) Int. Cl.⁵: **F04B 49/00, F04B 49/08**

(21) Anmeldenummer: **87117683.0**

(22) Anmeldetag: **30.11.87**

(54) Regeleinrichtung für eine verstellbare hydrostatische Maschine.

(30) Priorität: **30.12.86 DE 3644769**

(43) Veröffentlichungstag der Anmeldung:
**06.07.88 Patentblatt 88/27**

(45) Bekanntmachung des Hinweises auf die Patenterteilung:
**18.09.91 Patentblatt 91/38**

(84) Benannte Vertragsstaaten:
**DE FR GB IT SE**

(56) Entgegenhaltungen:
**DE-A- 3 345 264**
**FR-A- 2 532 693**

(73) Patentinhaber: **BRUENINGHAUS HYDRAULIK GmbH**
**An den Kelterwiesen 14**
**W-7240 Horb 1(DE)**

(72) Erfinder: **Krebs, Clemens**
**Sofienstrasse 2**
**W-7400 Tübingen(DE)**

(74) Vertreter: **Körber, Wolfhart, Dr.rer.nat. et al**
**Patentanwälte Dipl.-Ing. H. Mitscherlich**
**Dipl.-Ing. K. Gunschmann Dr.rer.nat. W. Körber Dipl.Ing. J. Schmidt-Evers Dipl.-Ing. W. Melzer Steinsdorfstrasse 10**
**W-8000 München 22(DE)**

## Beschreibung

Die Erfindung bezieht sich auf eine Regeleinrichtung nach dem Oberbegriff des Anspruchs 1.

Eine Steuereinrichtung dieser Art dient dazu, daß Verdrängungs- bzw. Schluckvolumen der hydrostatischen Maschine an vorhandene Betriebsbedingungen anzupassen. Hierzu kann die Steuereinrichtung außer einen Förderstromregler einen Druckregler und/oder einen Leistungsregler aufweisen.

Ein Förderstromregler enthält bekanntlich ein Stromventil in Form eines Drosselventils, das zwecks Veränderung des Durchflußstromes zur Beaufschlagung des Servorstellgerätes in Abhängigkeit des von dem oder den vorhandenen Verbrauchern aufgenommenen Volumenstromes verstellbar ist.

Eine Regeleinrichtung dieser Art ist in der DE-OS 33 45 264 beschrieben und dargestellt. Bei dieser bekannten Ausgestaltung erfolgt die Verstellung des eine sog. Förderstromdruckwaage enthaltenden Stromventils in Abängigkeit von der Druckdifferenz an einer Drosselstelle in der Arbeitsleitung des hydrostatischen Getriebes. Diese Ausgestaltung ist deshalb nachteilig, weil zur Regelung des Förderstromes hohe Regelverluste der Drosselstelle im Arbeitsstrom auftreten.

Der Erfindung liegt die Aufgabe zugrunde, eine Regeleinrichtung der eingangs bezeichneten Art so auszugestalten, daß sie ohne wesentliche Regelungsverluste im Arbeitsstrom betrieben werden kann.

Diese Aufgabe wird durch die kennzeichnenden Merkmale des Anspruchs 1 gelöst.

Bei der erfindungsgemäßen Ausgestaltung wird der Förderstromregler in Abhängigkeit des Verstellweges des Servostellgerätes direkt gesteuert, der eine dem von dem oder den Verbrauchern aufgenommenen Volumenstrom entsprechende Größe liefert. Das erfindungsgemäße Steuerventil steuert die Beaufschlagung des zweiten Steuerventils bzw. des Förderstromreglers in Abhängigkeit dieser Größe. Die erfindungsgemäße Ausgestaltung zeichnet sich durch Einfachheit aus und läßt sich ohne wesentliche Mehrkosten verwirklichen, wobei eine zu den eingangs angegebenen Nachteilen führende Drossel in der Arbeitsleitung in Fortfall kommt.

Die Ausgestaltung nach Anspruch 2 umfaßt eine praktische Maßnahme zur Übertragung der von dem oder den Verbrauchern aufgenomenen Volumenstroms entsprechenden Größe auf das erfindungsgemäße Steuerventil. Dabei ist es möglich, den Ventilschieber des Steuerventils unmittelbar mit der schiefen Steuerfläche in Kontakt zu halten oder ein Bewegungsübertragungsglied, z.B. ein Vorsteuerventil einzusetzen.

Im Rahmen der Erfindung ist es möglich, zur Steuerung des Regelventils bzw. des Förderstromreglers mittels des erfindungsgemäßen Steuerventils einen vom Arbeitsdruck abgzweigten Druck oder einen Hilfsdruck zu benutzen, der konstant sein und z.B. von einer Hilfspumpe erzeugt werden kann. Im Rahmen der Erfindung ist es jedoch auch möglich, zur Steuerung des Regelventils bzw. des Förderstromreglers den Arbeitsdruck direkt oder reduziert heranzuziehen, was jedoch zu gewissen arbeitsdruckabhängigen Kennlinienverfälschungen führt.

Nachfolgend wird die Erfindung anhand von in schematischen bzw. vereinfachten Zeichnungen dargestellten bevorzugten Ausführungsbeispielen näher erläutert. Es zeigt

Fig. 1 eine erfindungsgemäß ausgestaltete Regeleinrichtung für eine verstellbare hydrostatische Maschine;

Fig. 2 den Kennlinienverlauf der Regeleinrichtung;

Fig. 3 ein erfindungsgemäßes Steuerventil im axialen Schnitt;

Fig. 4 eine erfindungsgemäß ausgestaltete Regeleinrichtung als weiteres Ausführungsbeispiel.

Bei den zu beschreibenden Ausführungsbeispielen ist als hydrostatische Maschine eine Hydropumpe 1 verstellbaren Fördervolumens vorgesehen, die aus einem Vorratsbehälter S saugt und über eine Arbeitsleitung 2 eines hydrostatischen Getriebes offenen Kreislaufs einen nicht dargestellten Verbraucher B speist. Der Arbeitsdruck in der Arbeitsleitung 2 wird vom Verbraucher bestimmt. Das Fördervolumen der Hydropumpe 1 ist proportional zur Stellung des Stellkolbens 3 einer allgemein mit 4 bezeichneten hydraulischen Stellvorrichtung mit einem verstellbaren Maximumanschlag 5 und einem verstellbaren Minimumanschlag 6. Liegt der Stellkolben 3 am mechanischen Maximumanschlag 5 an, fördert die Hydropumpe 1 maximale Fördermenge. Liegt der Stellkolben 3 am mechanischen Minimumanschlag 6 an, beträgt die Fördermenge 0. Der Stellkolben 3 ist als Differenzkolben ausgeführt mit einem Kolben 7 großer Arbeitsfläche 8 und einem Kolben 9 kleiner Arbietsfläche 11. Die kleine Arbeitsfläche 11 ist durch einen hydraulischen Leitungsabschnitt 12 mit dem Arbeitsdruck dauernd beaufschlagt. Die große Arbeitsfläche 8 ist durch einen Leitungsabschnitt 13 mit einem Regeldruck dauernd beaufschlagt, der durch ein einem Förderstromregler 14 zugeordnetes Stromventil 15, ein Leistungsregelventil 16 eines Leistungsreglers 17 und ein Druckregelventil 18 eines Druckreglers 19 geregelt ist, die in Reihe in der zugehörigen hydraulischen Leitung angeordnet sind, in deren Leitungsabschnitt 13 der Regeldruck und in deren Leitungsabschnitt 21 der Arbeitsdruck herrscht. Wenn das Stromventil 15, das Leistungsregelventil 16 und das Druckregelventil 18 alle in Schaltposition I stehen, ist der der großen Arbeitsfläche 8 zugehörige Arbeitsraum 25 innerhalb eines angedeuteten Zylinders 26 zum Vorratsbehälter 27 hin entlastet. Der Stellkolben 3 wird dann hydraulisch gegen den Maximumanschlag 5 gedrückt. Im drucklosen Zustand wird der Stellkolben 3 durch eine Feder 28 ebenfalls gegen den Maximumanschlag 5 gedrückt.

Im Stellkolben 3 ist quer zu diesem ein Druckkolben 31 beweglich geführt, der über einen Längskanal 32 im kleinen Kolben 9 dauernd mit dem Arbeitsdruck beaufschlagt ist. Der Druckkolben 31 wirkt auf einen Hebelarm 33 eines Winkelhebels 34 mit einer Kraft F, die proportional zum Arbeitsdruck ist. Die Drehachse 35 des Winkelhebels 34 ist zwecks Abstimmung parallel zur Verstellbewegung des Stellkolbens 3 verstellbar und im wesentlichen so angeordnet, daß der Druckkolben 31 bei Fördervolumen 0 genau auf die Drehachse 35 drückt. Der wirksame Hebelarm der Kraft F - bezogen auf die Drehachse 35 ist daher proportional zum Fördervolumen der Hydropumpe 1. Infolgedessen ist auch das in den Winkelhebel 34 eingeleitete Drehmoment proportional zur Antriebsleistung der Hydropumpe 1 (bei konstanter Antriebsdrehzahl). Der andere Hebelarm 36 des Winkelhebels 34 verstellt den Ventilschieber 23 des Leistungsregelventils 16 gegen eine Feder 37, vorzugweise einstellbarer Federkraft.

Bei Leistungsüberschreitung nimmt der Ventilschieber 23 des Leistungsregelventils 16 die Schaltstellung II ein und verbindet den Leitungsabschnitt 13 mit dem Leitungsabschnitt 21, wodurch der Stellkolben 3 in Richtung auf dem Minimumanschlag 6 verschoben wird, das Fördervolumen der Hydropumpe 1 abnimmt und die Leistung sinkt. Bei Leistungsunterschreitung nimmt der Ventilschieber 23 die Schaltstellung I ein und verbindet den Leitungsabschnitt 13 über einen Leitungsabschnitt 38 mit dem Vorratsbehälter 27, wodurch der Stellkolben 3 in Richtung Maximumanschlag 5 verschoben wird, das Fördervolumen der Hydropumpe 1 zunimmt und die Leistung steigt.

Der Ventilschieber 24 des Druckregelventils 18 ist über einen Leitungsabschnitt 38 mit dem den Arbeitsdruck führenden Leitungsabschnitt 21 verbunden. Eine Feder 39 vorzugsweise veränderlicher Federkraft hält bei der Druckregelung der hydraulischen Kraft das Gleichgewicht. Bei Drucküberschreitung nimmt der Ventilschieber 24 die Schaltstellung II ein, wodurch das Fördervolumen-Einstellglied der Hydropumpe 1 einschwenkt. Bei Druckunterschreitung nimmt der Ventilschieber 24 die Schaltstellung I ein, bei der das Einstellglied ausschwenkt.

Das Stromventil 15 weist eine sog. Druckwaage auf. Der Ventilschieber 41 des Stromventils 15 ist auf seiner mit 42 bezeichneten Seite mit einem Hilfsdruck $p_H$ beaufschlagbar, der in einer zu dieser Seite 42 führenden hydraulischen Leitung 43 vorhanden ist und durch eine Hilfspumpe 44 erzeugt wird, die ebenfalls vom Motor M angetrieben wird. Ein Druckbegrenzungsventil in der Leitung 43 ist mit 40 bezeichnet. An der gegenüberliegenden, mit 45 bezeichneten Seite ist der Ventilschieber 41 mit einem gesteuerten Hilfsdruck $p_{H1}$ in einer hydraulischen Leitung 47 beaufschlagt. Der gesteuerte Hilfsdruck $p_{H1}$ wird durch ein Steuerventil 48 gesteuert, das den Hilfsdruck $p_{H1}$ durch Entlastung zu einem drucklosen Behälter 49 hin in Abhängigkeit von der Stellung des Stellkolbens 3 und des Steuerdruckes $p_{St}$ in Leitung 50, bzw. Weg der Steuerbuchse 61 steuert. Hierzu weist der Stellkolben 3 eine zu seiner Längsachse schiefe Steuerfläche 51 auf, an der der Ventilschieber 52 des Steuerventils 48 mit Unterstützung der Feder 54 anliegt sowie bei einer Verstellung des Stellkolbens 3 gleitet und dabei zwecks Steuerung des Hilfsdrucks $p_{H1}$ entsprechend verstellt wird. Hierdurch wird der Durchgang zwischen der Leitung 47 und dem zum Vorratsbehälter führenden Leitungsabschnitt 53 entsprechend geöffnet bzw. geschlossen, wodurch der Druck in der Leitung 47 fördervolumenabhängig gesteuert wird. Eine erste Steuerung dieses Hilfsdruckes $p_{H1}$ erfolgt schon durch einen das Stromventil 15 umgehenden, die Leitung 43 mit der Leitung 47 verbindenden Leitungsabschnitt 55 mit einer Drossel 56. Die die Seite 45 des Ventilschiebers 41 beaufschlagende Feder 58 ist so ausgelegt, daß bei einem bestimmten Druckunterschied $\Delta p$ ein Kräftegleichgewicht herrscht. Das $\Delta p$ an der in der Umgehungsleitung 55 angeordneten Drossel 56 wird vom Ölstrom durch das Steuerventil 48 erzeugt.

Die Leitung 43 ist durch einen Leitungsabschnitt 29 mit der Leitung 21 verbunden, wobei im Leitungsabschnitt 29 ein zur Leitung 21 hin öffnendes Rückschlagventil 30 angeordnet ist. Ein Rückschlagventil 30 ist auch in der Leitung 21 zwischen dem Abzweig und der Arbeitsleitung 2 vorgesehen.

Das Stromventil 15, das Leistungsregelventil 16 und das Druckregelventil 17 sind Proportionalventile.

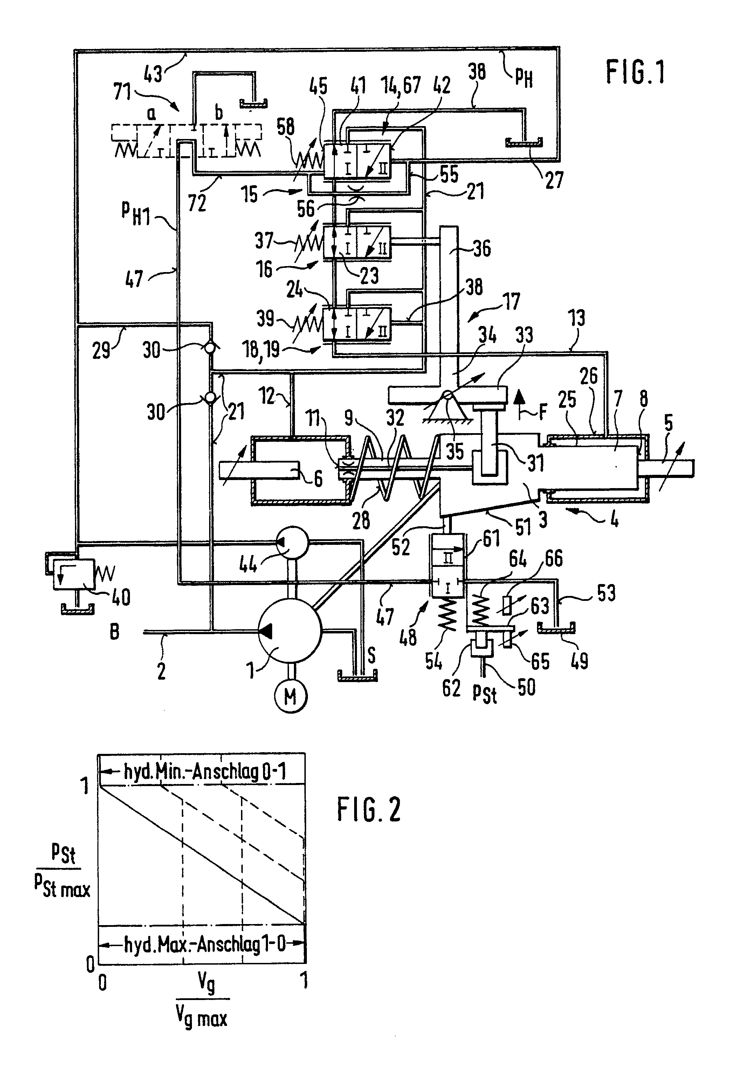

In das Steuerventil 48 ist eine zweite Ventilfunktion integriert, die eine weitere Steuerung des Hilfsdrucks $p_{H1}$ ermöglicht. Dies ist in Fig. 1 durch eine Steuerbuchse 61 verdeutlicht, die durch ein Stellglied wahlweise verstellbar ist. Das Stellglied wird beim vorliegenden Ausführungsbeispiel durch eine Zylinderkolbeneinheit 62 gebildet, die mit einem variablen Steuerdruck $p_{St}$ in einer Steuerleitung 50 beaufschlagbar ist, mit der Steuerbuchse 61 eine starre Einheit bildet in Form eines Verstellgestänges 63, und entgegen der Zylinderkolbeneinheit 62 durch eine Feder 64 beaufschlagt ist.

Die Steuerbuchse 61 ist somit wahlweise gegen die Feder 64 verstellbar, wodurch gezielt auf den Hilfsdruck $p_{H1}$ und somit auf das Stromventil 15 Einfluß genommen werden kann zwecks Einstellung der Fördermenge. Die Steuerung des Steuerdruckes $p_{St}$ erfolgt durch ein nicht dargestelltes Steuerglied, beispielsweise durch ein Ventil, daß durch ein Einstellorgan für Geschwindigkeit (Gaspedal) verstellbar ist. Bei Druckerhöhung des Steuerdrucks $p_{St}$ nimmt das Steuerventil 48 die Stellung II ein, in der der Durchgang zum Vorratsbehälter hin geöffnet ist.

Der Steuerbuchse 61 bzw. dem Verstellgestänge 63 sind zwei verstellbare Anschläge 65, 66 zugeordnet, die die Verstellbewegung der Steuerbuchse 61 begrenzen.

Bei einer Stellbewegung des Stellkolbens 3 nach rechts baut sich aufgrund der durch die Steuerfläche 51 hervorgerufene Verstellung des Steuerventils 48 der Hilfsdruck $p_{H1}$ in der Leitung 47 zum Leitungsabschnitt 53 hin ab. Der an der Drossel 56 entstehende Druckunterschied $\Delta p$ stellt den Ventilschieber 41 in seine Stellung II so daß über die Leitung 13 die große Arbeitsfläche 8 des Stellkolbens 3 mit einem erhöhten Regeldruck beaufschlagt wird. Der Stellkolben 3 wird hierdurch in Richtung auf den Minimumanschlag 6 verschoben. Dabei wird der Ventilschieber 52 des Steuerventils 48 zurückgeschoben, wodurch sich die zugehörigen Steuerkanten schließen. Bei einer geringen Steuerkantenöffnung, die an der Drossel 56 gerade den Druckunterschied $\Delta p$ erzeugt, das den Ventilschieber 41 des Stromventils 15 im Gleichgewicht gegen die Feder 58 hält, nimmt der Stellkolben 3 seine Regelposition ein. Es handelt sich um eine Lagerregelung des Stellkolbens 3 mit Wegabgleich im Steuerventil 48 und hydraulischem Kraftabgleich an der vorbeschriebenen, im Stromventil 15 enthaltenen und allgemein mit 67 bezeichneten Druckwaage. Die Bewegung des Stellkolbens 3 verhält sich proportional zum Weg der Steuerbuchse 61 bzw. zum Steuerdruck $p_{St}$, was auch anhand der Kennlinien in Fig. 2 ersichtlich ist. Der Max.-Anschlag 65 und der Min.-Anschlag 66 ergeben somit eine Hubbegrenzung für den Stellkolben 3.

Der Max.-Anschlag 65 und der Min.-Anschlag 66 können außer Funktion gebracht bzw. überfahren werden , wodurch der Stellkolben 3 weiter gegen den Maximumanschlag 5 bzw. Minimumanschlag 6 verstellbar ist. Dies kann durch eine Verstellung bzw. Außerfunktionsetzung der Anschläge 65, 66 herbeigeführt werden.

Beim vorliegenden Ausführungsbeispiel ist hierzu ein andeutungsweise dargestelltes Wegeventil 71 vorgesehen, das in seiner Offenstellung dargestellt ist. Der Min.-Anschlag 66 kann durch Entlasten des sich zwischen dem Stromventil 15 und dem Wegeventil 71 erstreckenden Leitungsabschnitts 72 zum Vorratsbehälter 69 hin (Stellung b des Wegeventils 71) bis zum Minimumanschlag 6 überfahren werden. Der Max.-Anschlag 65 kann durch Absperren des Leitungsabschnittes 72 (Stellung a des Wegeventils 71) bis zum Max.-Anschlag 5 überfahren werden. Hierdurch ist eine hydraulische Hubbegrenzung mit vier Begrenzungsstellungen für den Stellkolben 3 ermöglicht, sowie eine kontinuierliche Verstellung zwischen den Anschlägen 65, 66.

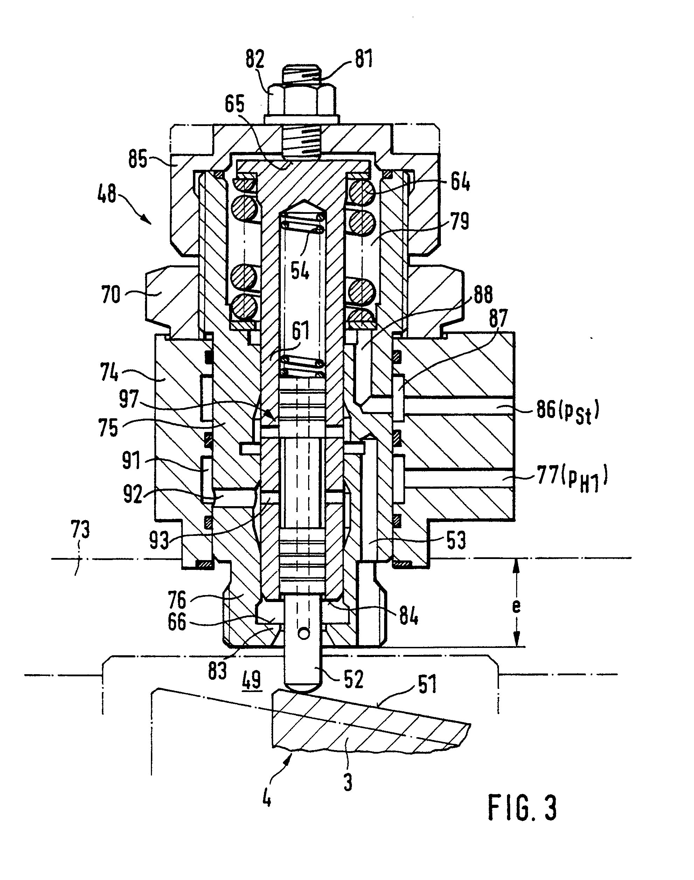

Der Leistungsregler 17 und Druckregler 19 können ebenfalls jede von der Hubbegrenzung vorgegebene Schwenkstellung des Stellkolbens 3 überfahren. Das Steuerventil 48 weist eine besondere, in Fig. 3 dargestellte Ausgestaltung auf. Es sind der Stellkolben 3 und das zugehörige Gehäuse 73 der Stellvorrichtung 4 andeutungsweise dargestellt. Eine Einstellbuchse 75 des Steuerventils 48 ist in ein Gewindeloch des Gehäuses 73 der Stellvorrichtung 4 eingeschraubt, wobei die Einschraubtiefe veränderlich und mittels einer auf der Einstellbuchse 75 angeordneten Kontermutter 70 festlegbar ist, die gegen einen am Gehäuse 73 anliegenden Mantelring 74 festziehbar ist. In der Einstellbuchse 75 ist die hohlzylindrische Steuerbuchse 61 axial verschiebbar, in dem der Ventilschieber 52 ebenfalls axial verschiebbar geführt ist. Der Ventilschieber 52 durchragt das Einschraubende 76 der Einstellbuchse 75 und steht in Kontakt mit der schiefen Steuerfläche 51 des Stellkolbens 3, gegen die er durch die sich an der Steuerbuchse 61 abstützende Druckfeder 54 vorgespannt ist. Die Steuerbuchse 61 ist in die entgegengesetzte Richtung durch die Druckfeder 64 beaufschlagt, die in einer Ausnehmung 79 der Einstellbuchse 75 angeordnet ist, sich mit ihrem einen Ende an einer Schulter der Einstellbuchse 75 abstützt und mit ihrem anderen Ende gegen einen Kragen an der Steuerbuchse 61 wirkt. Die Druckfeder 64 spannt die Steuerbuchse 61 gegen eine Gewindeschraube 81 vor, die den Max.-Anschlag 65 bildet, verstellbar und durch die auf der Gewindeschraube 81 angeordnete Gewindemutter 82 feststellbar ist. Der Min.-Anschlag 66 wird durch eine Innenschulter 83 an der Einstellbuchse 75 gebildet, der mit dem dem Max.-Anschlag 65 abgewandte Stirnende 84 der Steuerbuchse 61 zusammenwirkt. Die Einstellung dieses Anschlags wird durch die Einschraubtiefe e der Einstellbuchse 75 im Gehäuse 73 bestimmt. Die Gewindeschraube 81 befindet sich in einem Schraubteil 85, das auf die Einstellbuchse 75 aufgeschraubt ist.

Das Mantelteil 74 weist einen Leitungsanschluß 86 für die Leitung 50 auf. Der Steuerdruck $p_{St}$ gelangt mittels einem Ringkanal 87 und einem Kanal 88 in die vom Schraubteil 85 verschlossene Ausnehmung 79, wo er die Steuerbuchse 61 gegen den Min.-Anschlag 66, nämlich die Innenschulter 83 zu verschieben vermag. Der gesteuerte Hilfsdruck $p_{H1}$ gelangt über den Leitungsanschluß 77 und entsprechende Kanäle 91, 92, 93 zur Steuerkante 97, in bzw. zwischen der Steuerbuchse 61 und dem Ventilschieber 52, wodurch der Durchgang zwischen der Leitung 47 und 53 zu dem im wesentlichen drucklosen Gehäuseinnenraum 49 des Gehäuses 73 in der schon beschriebenen Weise steuerbar ist.

Mit 60 ist ein Kanal bezeichnet, zwecks Druckentlastung des die Feder 54 aufnehmenden Hohlraums.

Das in Fig. 3 dargestellte Steuerventil 48 steht in funktionellem Zusammenhang mit dem Wegeventil 71, in dessen Stellung b das Steuerventil 48 einschl. der Anschläge 65, 66 in der Ausgestaltung gemäß Fig. 3 außer Funktion gesetzt sind.

Das vorbeschriebene Ausführungsbeispiel ist in üblicher Weise so ausgelegt, daß im drucklosen Zustand die Hydropumpe 1 bzw. der Verstellkolben 3 sich in ihren Stellungen für maximales Fördervolumen befinden. Im Rahmen der Erfindung ist es für besondere Verwendungszwecke oder aus Sicherheitsgründen auch möglich, die Anordnung so auszulegen, daß die Regeleinrichtung sich im drucklosen Zustand in ihrer Stellung für minimales Fördervolumen befindet. In einem solchen Fall ist die Anordnung bzw. Wirkrichtung der Zylinderkolbeneinheit 62 und der zugehörigen Feder 64 einschl. der Kennlinien gemäß Fig. 2 umgekehrt.

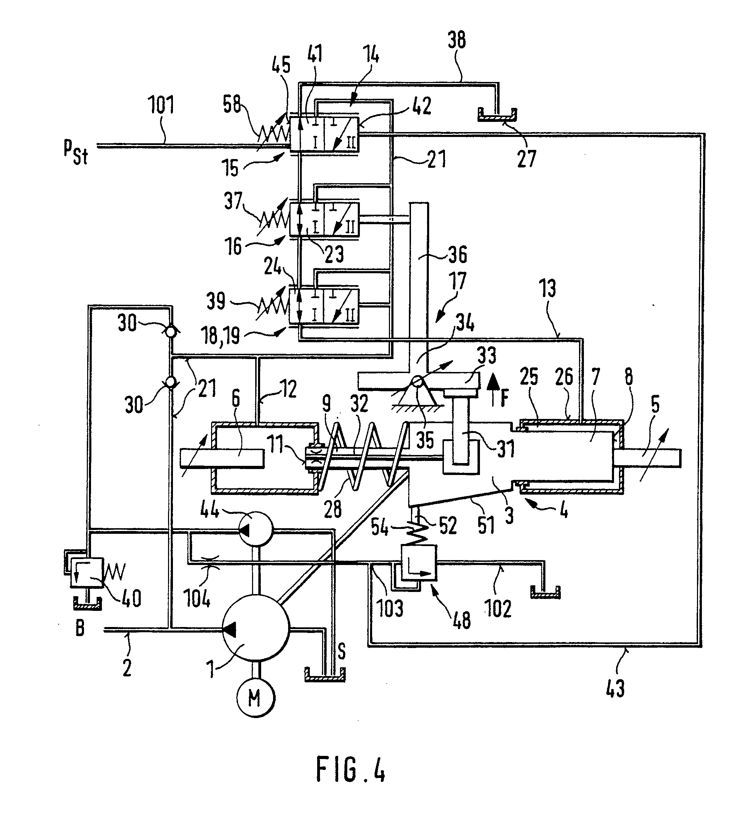

Das Ausführungsbeispiel gemäß Fig. 4 unterscheidet sich vom vorbeschriebenen im wesentlichen dadurch, daß zu den Maximum- und Minimumanschlägen 5, 6 keine weiteren Begrenzungsanschläge (entsprechend 65, 66) vorgesehen sind. Außerdem ist ein Steuereingriff mittels des Steuerdrucks $p_{St}$ auf das Steuerventil 48 nicht vorgesehen. Bei diesem Ausführungsbeispiel wirkt der Steuerdruck $p_{St}$ über eine hydraulische Leitung 101 direkt auf das Stromventil 15. Das Steuerventil 48 wirkt hier auf die Leitung 43, die die Hilfspumpe 44 mit dem Stromventil 15 verbindet. Das Steuerventil 48 ist zur gesteuerten Entlastung der Leitung 43 in einem von letzterer abzweigenden und zu einem drucklosen Behälter führenden Leitungsabschnitt 102 angeordnet. Der Abzweig 103 befindet sich zwischen einer Drossel 104 und dem Stromventil 15. Alle anderen Teile dieser Regeleinrichtung entsprechen dem ersten Ausführungsbeispiel und sind auch entsprechend bezeichnet. Das Stromventil 15 weist bei diesem Ausführungsbeispiel keine Drossel 56 auf.

Das Ventil 48 erzeugt in der Leitung 43 einen Druck $p_{H1}$ (Istwert), der proportional zur Schwenkstellung des Stellkolbens 3 ist. Am Stromventil 15 wird der Istwert $p_{H1}$ mit dem Sollwert $p_{St}$ verglichen. Das Kraftgleichgewicht wird mit Hilfe der Feder 58 eingestellt.

## Patentansprüche

1. Regeleinrichtung für eine verstellbare hydrostatische Maschine, mit einem hydraulischen Servostellgerät (4) zur stufenlosen Einstellung des Verdrängungsvolumens, mit Ventileinrichtungen (16, 18) zur Regelung des Servostellgerätes (4) in Abhängigkeit von der Leistung der hydrostatischen Maschine, und mit einem Regelventil (15) zur Regelung des Servostellgerätes (4) in Abhängigkeit vom Verdrängungsvolumen der hydrostatischen Maschine dadurch gekennzeichnet, daß zur Steuerung des das Regelventil (15) beaufschlagenden Druckes ein Steuerventil (48) vorgesehen ist, das in Abhängigkeit von der Verstellbewegung des Servostellgerätes (4) gesteuert ist.

2. Regeleinrichtung nach Anspruch 1, dadurch gekennzeichnet, daß der Stellkolben (3) des Servostellgerätes (4) oder ein Anbauteil desselben eine zu einer Bewegungsrichtung schiefe Steuerfläche (51) aufweist, an der der Ventilschieber (52) des Steuerventiles (48) oder ein Antriebsglied desselben anliegt.

3. Regeleinrichtung nach Anspruch 1 oder 2, dadurch gekennzeichnet, daß das Regelventil (15) einerseits von einem vorgebbaren Steuerdruck ($p_{St}$) und einer Feder (58) und andererseits von einem aus einem Hilfsdruck abgeleiteten Steuerdruck ($p_{H1}$) beaufschlagt ist, dessen Höhe in Abhängigkeit von der Stellung des Steuerventiles (48) eingestellt wird (Fig. 4).

4. Regeleinrichtung nach Anspruch 1 oder 2, dadurch gekennzeichnet, daß das Regelventil (15) einerseits von einem konstanten Hilfsdruck ($p_H$) und andererseits von einer Feder (58) und einem Hilfssteuerdruck ($p_{H1}$) beaufschlagt ist, dessen Höhe mit dem Steuerventil (48) durch Vergleich der Stellung des Servostellgerätes (4) mit einem vorgebbaren Steuerdruck ($p_{St}$) eingestellt wird (Fig. 1).

5. Regeleinrichtung nach Anspruch 2, dadurch gekennzeichnet, daß das Steuerventil (48) in einer einen Hilfsdruck führenden Leitung (43; 47) angeordnet ist.

6. Regeleinrichtung nach einem der Ansprüche 1 bis 5, dadurch gekennzeichnet, daß der Hilfssteuerdruck ($p_{H1}$) in der das Steuerventil (48) enthaltenden Leitung (47) durch eine Steuerventilvorrichtung (61), welche den Vergleich der Stellung des Servostellgerätes (4) mit dem vorgebbaren Steuerdruck ($p_{St}$) vornimmt, veränderlich ist.

7. Regeleinrichtung nach Anspruch 6, dadurch gekennzeichnet, daß die Steuerventilvorrichtung (61) direkt durch eine Wegeinstellung oder mittels einer den vorgebbaren Steuerdruck ($p_{St}$) enthaltenden Steuerleitung (50) ansteuerbar ist.

8. Regeleinrichtung nach Anspruch 6 oder 7, dadurch gekennzeichnet, daß dem Steuerventil (48) oder der Steuerventilvorrichtung (61) verstellbare Begrenzungen der Steuerbewegung vorzugsweise in Form von Anschlägen (65,66) zugeordnet sind.

9. Regeleinrichtung nach einem der Ansprüche 6 bis 8, dadurch gekennzeichnet, daß die Steuerventilvorrichtung (61) und das Steuerventil (48) zu einem gemeinsamen Steuerventil integriert sind (Fig. 3).

10. Regeleinrichtung nach Anspruch 9, dadurch gekennzeichnet, daß das gemeinsame Steuerventil einen parallel zu dem Ventilschieber (52) des Steuerventiles (48) bewegbaren Steuerschieber der Steuerventilvorrichtung (61) aufweist.

11. Regeleinrichtung nach Anspruch 10, dadurch gekennzeichnet daß der Ventilschieber (52) und der Steuerschieber der Steuerventilvorrichtung (61) in einer Einstellbuchse (75) angeordnet sind, welche in einen Träger (73) einschraubbar ist und einer der beiden Anschläge (65,66) durch die Einschraubtiefe (e) bestimmt ist.

12. Regeleinrichtung nach Anspruch 9 oder 10, dadurch gekennzeichnet, daß der andere der beiden Anschläge (65, 66) durch eine Einstellschraube (81) gebildet ist.

13. Regeleinrichtung nach einem der Ansprüche 8 bis 10, dadurch gekennzeichnet, daß die Anschläge (65,66) wahlweise außer Funktion bringbar bzw. überfahrbar sind.

14. Regeleinrichtung nach einem der Ansprüche 1 bis 13, dadurch gekennzeichnet, daß zur Begrenzung der Bewegung des Stellkolbens (3) des Servostellgerätes (4) wenigstens in einer Bewegungsrichtung ein verstellbarer Anschlag (5, 6) vorgesehen ist.

## Claims

1. A regulator for an adjustable hydrostatic machine having a hydraulic servo controller (4) for continuous variation of the displacement volume, valve devices (16, 18) for regulating the servo controller (4) in dependence on the output of the hydrostatic machine, and
a regulating valve (15) for regulating the servo controller (4) in dependence on the displacement volume of the hydrostatic machine,
characterised in that a control valve (48), controlled in dependence on the controlling movement of the servo controller (4), is provided for controlling the pressure acting on the regulating valve (15).

2. A regulator according to claim 1, characterised in that the control piston (3) of the servo controller (4), or a part attached thereto, has a control surface (51) inclined to its direction of motion, against which the valve spool (52) of the control valve (48) or a driving member thereof, abuts.

3. A regulator according to claim 1 or claim 2, characterised in that the regulating valve (15) is acted on on one side by a predeterminable control pressure ($p_{St}$) and a spring (58) and on the other side by a control pressure ($p_{H1}$), derived from an auxiliary pressure, the magnitude of which is adjusted in dependence on the position of the control valve (48) (Fig. 4).

4. A regulator according to claim 1 or claim 2, characterised in that the regulating valve (15) is acted on on one side by a constant auxiliary pressure ($p_H$) and on the other side by a spring (58) and an auxiliary control pressure ($p_{H1}$), the magnitude of which is adjusted by the control valve (48) by comparison of the position of the servo controller (4) with a predeterminable control pressure ($p_{St}$) (Fig. 1).

5. A regulator according to claim 2, characterised in that the control valve (48) is arranged in a line (43; 47) carrying an auxiliary pressure.

6. A regulator according to any one of claims 1 to 5, characterised in that the auxiliary control pressure ($p_{H1}$) in the line (47) that includes the control valve (48) can be varied by means of a control valve device (61) that performs the comparison of the position of the servo controller (4) with the predeterminable control pressure ($p_{St}$).

7. A regulator according to claim 6, characterised in that the control valve device (61) can be controlled directly by a displacement adjustment or by means of a control line (50) carrying a predeterminable control pressure ($p_{St}$).

8. A regulator according to claim 6 or claim 7, characterised in that adjustable limits of the control movement, preferably in the form of stops (65, 66), are associated with the control valve (48) or the control valve device (61).

9. A regulator according to any one of claims 6 to 8, characterised in that the control valve device (61) and the control valve (48) are integrated to form a common control valve (Fig. 3).

10. A regulator according to claim 9, characterised in that the common control valve includes a control member of the control valve device (61) that is movable parallel to the valve spool (52) of the control valve (48).

11. A regulator according to claim 10, characterised in that the valve spool (52) and the control member of the control valve device (61) are arranged in an adjusting sleeve (75) which can be screwed into a carrier (73) and that one of the two stops (65, 66) is determined by the depth (e) to which it is screwed in.

12. A regulator according to claim 9 or claim 10, characterised in that the second of the two stops (65, 66) is formed by an adjusting screw (81).

13. A regulator according to any one of claims 8 to 10, characterised in that the stops (65, 66) can be disabled or overridden at will.

14. A regulator according to any one of claims 1 to 13, characterised in that an adjustable stop (5, 6) is provided to limit the movement of the control piston (3) of the servo controller (4) in at least one direction.

**Revendications**

1. Dispositif de régulation pour une machine hydrostatique réglable, avec un appareil hydraulique de réglage à asservissement (4) pour le réglage progressif du volume de refoulement, avec des dispositifs de vannes (16, 18) pour la régulation de l'appareil de réglage à asservissement (4) en fonction de la puissance de la machine hydrostatique, et une vanne de régulation (15) pour la régulation de l'appareil de réglage à asservissement (4) en fonction du volume de refoulement de la machine hydrostatique, caractérisé en ce qu'il est prévu, pour commander la pression agissant sur la vanne de régulation (15), une vanne de commande (48) qui est commandée en fonction du mouvement de réglage de l'appareil de réglage à asservissement(4).

2. Dispositif de régulation selon la revendication 1, caractérisé en ce que le piston de réglage (3) de l'appareil de réglage à asservissement (4) ou une pièce rapportée sur ce piston présente une surface de commande (51) oblique par rapport à un sens de mouvement, sur laquelle s'appuie le tiroir (52) de la vanne de commande (48) ou un organe d'entraînement de celle-ci.

3. Dispositif de régulation selon la revendication 1 ou 2, caractérisé en ce que la vanne de régulation (15) est soumise, d'une part à une pression de commande ($p_{St}$) prédéterminée et à la pression d'un ressort (58), et d'autre part à une pression de commande ($P_{H1}$) dérivée d'une pression auxiliaire, dont la valeur est réglée en fonction de la position de la vanne de commande (48) (Figure 4).

4. Dispositif de régulation selon la revendication 1 ou 2, caractérisé en ce que la vanne de régulation (15) est soumise d'une part à une pression auxiliaire constante ($P_H$) et d'autre part à un ressort (58) et à une pression auxiliaire de commande ($P_{H1}$) dont la grandeur est réglée au moyen de la vanne de commande (48) par comparaison de la position de l'appareil de réglage à asservissement (4) avec une pression de commande ($P_{St}$) pouvant être prédéterminée (Figure 1).

5. Dispositif de régulation selon la revendication 2, caractérisé en ce que la vanne de commande (48) est disposée dans une conduite (43; 47) transmettant une pression auxiliaire.

6. Dispositif de régulation selon une des revendications 1 à 5, caractérisé en ce que la pression auxiliaire de commande ($P_{H1}$) dans la conduite (47) contenant la vanne de commande (48) est modifiable par un dispositif de vanne de commande (61) qui effectue la comparaison de la position de l'appareil de réglage à asservissement (4) avec la pression de commande ($P_{St}$) susceptible d'être prédéterminée.

7. Dispositif de régulation selon la revendication 6, caractérisé en ce que le dispositif de vanne de commande (61) peut être commandé directement par un réglage à plusieurs voies ou au moyen d'une conduite de commande (50) contenant la pression de commande ($P_{St}$) susceptible d'être prédéterminée.

8. Dispositif de régulation selon la revendication 6 ou 7, caractérisé en ce que des limitations réglables du mouvement de commande sont associées à la vanne de commande (48), ou au dispositif de vanne de commande (61), de préférence sous la forme de butées (65, 66).

9. Dispositif de régulation selon une des revendications 6 à 8, caractérisé en ce que le dispositif de vanne de commande (61) et la vanne de commande (48) sont intégrés sous la forme d'une vanne de commande commune (Figure 3).

10. Dispositif de régulation selon la revendication 9, caractérisé en ce que la vanne de commande commune présente un tiroir de commande du dispositif de vanne de commande (61) mobile parallèlement au tiroir (52) de la vanne de commande (48).

11. Dispositif de régulation selon la revendication 10, caractérisé en ce que le tiroir de vanne (52) et le tiroir de commande du dispositif de vanne de commande (61) sont disposés dans une douille de réglage (75) qui peut être vissée dans un support (73) et en ce que l'une des deux butées (65, 66) est déterminée par la profondeur de vissage (e).

12. Dispositif de régulation selon la revendication 9 ou 10, caractérisé en ce que l'autre des deux butées (65, 66) est constituée par une vis de réglage (81).

13. Dispositif de régulation selon une des revendications 8 à 10, caractérisé en ce que les butées (65, 66) peuvent, au choix, être neutralisées ou outrepassées.

14. Dispositif de régulation selon une des revendications 1 à 13, caractérisé en ce qu'il est prévu, pour limiter le mouvement du piston de réglage (3) de l'appareil de réglage à asservissement (4) au moins dans un sens de mouvement, une butée réglable (5, 6).

FIG.1

FIG.2

FIG. 3

FIG.4